# EUROPÄISCHE PATENTSCHRIFT

(11) **EP 1 609 848 B1**
(45) Veröffentlichungstag und Bekanntmachung des Hinweises auf die Patenterteilung: **22.08.2007**
(21) Anmeldenummer: 05010932.1
(22) Anmeldetag: 20.05.2005
(51) Int. Cl.: C12C 7/28, B01J 2/16, B01J 2/02, A23P 1/02, A23L 1/185

(54) **Verfahren zur Granulation von Malzextrakten**
Process for granulation of malt extracts
Procédé de granulation d'un extrait de malt

(30) Priorität: 15.06.2004 DE 102004028883
(43) Veröffentlichungstag der Anmeldung: 28.12.2005
(73) Patentinhaber: Glatt Ingenieurtechnik GmbH, D-99427 Weimar (DE)
(72) Erfinder: Rümpler, Karlheinz Dr., 99425 Weimar (DE); Waskow, Mike, 99423 Weimar (DE); Wand, Bernhard, 99510 Apolda (DE)
(74) Vertreter: Maucher, Wolfgang

(56) Entgegenhaltungen:
- EP-A- 1 126 017
- WO-A-01/37980
- WO-A-02/088294
- DE-A- 3 609 133
- DE-A- 10 146 778
- DE-A1- 10 138 927
- US-A- 4 946 654

## Beschreibung

Die Erfindung betrifft ein Verfahren zur Herstellung von Granulaten mit den im Oberbegriff des Patentanspruches 1 genannten Merkmalen. Typische Substanzen im Sinne der vorliegenden Erfindung sind die unterschiedlichen Malzextrakte aus Getreide wie Gerste, Weizen, Reis, Mais etc., die für die Verwendung in der Lebensmittel- und Getränkeindustrie sowie zur Bierherstellung vorgesehen sind.

Malzextrakte werden bisher in der Regel als wässrige Suspensionen mit einem Feststoffanteil bis zu 80 % eingesetzt. Wenn die Weiterverarbeitung nicht am gleichen Ort erfolgt, sind dann größere Mengen Wasser zu transportieren.

Malzextrakte können aber auch nach Vakuumverdampfung eingedampft in Wirbelschichten granuliert werden (EP 02712929.5). Dabei ist die Handhabung des Konzentrates schwierig. Es treten Verklebungen und instabile Prozessbedingungen auf. Die Effektivität solcher Prozesse ist gering.

Granulatoren und die zugehörigen Verfahren sind auch aus US-A-4354450 und WO-A-04/108911 bekannt.

Aufgabe der Erfindung ist es, ein Verfahren zur Herstellung von Granulaten zu schaffen, bei dem die Teilchen kontinuierlich oder chargenweise unter weitester Vermeidung von Temperaturungleichverteilungen im Herstellungsprozess und bei Erhöhung der Ausbeute hergestellt werden können. Gleichzeitig soll die Kontrollierbarkeit der Granulation bei der Herstellung verbessert werden.

Diese Aufgabe wird erfindungsgemäß durch die kennzeichnenden Merkmale des Patentanspruches 1 gelöst.

Erfindungsgemäß erfolgt die Herstellung von Partikeln durch Sprühgranulation durch eine Verknüpfung zwischen den thermischen Bedingungen in der Sprühzone und den Temperaturbedingungen im übrigen Bereich des Apparates. Im erfindungsgemäßen Prozess wird dies dadurch erreicht, dass die Zuführung des erhitzten Prozessgases zur Trocknung ausschließlich im Bedüsungsbereich erfolgt. Die sichere Zuführung von Teilchen in den Bedüsungsbereich hinein erfolgt durch die spezielle geometrische Gestaltung des Apparates unter Nutzung der Schwerkraft.

Der Vorteil der erfindungsgemäßen Lösung besteht darin, dass die Herstellungsbedingungen an die herzustellenden Materialeigenschaften angepasst werden. Temperaturungleichverteilungen werden weitestgehend vermieden, wodurch auch eine Steigerung der Ausbeute erreicht wird.

Weitere vorteilhafte Ausgestaltungen sind in den Unteransprüchen beschrieben, sie werden in der Beschreibung zusammen mit ihrer Wirkung erläutert.

Die Erfindung wird nachfolgend anhand eines Ausführungsbeispiels näher erläutert. In der dazugehörigen Zeichnungen ist schematisch eine Anlage zur Durchführung des erfindungsgemäßen Verfahrens dargestellt.

Die zur Trocknung der herzustellenden Granulate erforderliche Menge an erwärmtem Prozessgas 10 (in der Regel erhitzte Luft oder auch Stickstoff) wird einer Zuluftkammer 17, mit vorzugsweise rechteckigem Querschnitt 9 und begrenzenden Seitenwänden 5, zugeführt. In der Zuluftkammer 17 verteilt sich das Prozessgas 10 und tritt über Spaltöffnungen 1 in den Prozessraum 8 in Form von Gasstrahlen 2 ein. Der vorzugsweise horizontal in den Spalt 1 eintretende Prozessgasstrom wird durch das Umlenkteil 3 vorzugsweise nach oben in den Prozessraum 8 hinein umgelenkt und strömt als eine Art Freistrahl in den Apparat hinein. Im weiteren kann sich der Apparatequerschnitt optional in der Expansionszone 14 vergrößern, so dass sich die Geschwindigkeit der Prozessgasströmung nach oben hin stetig verringert. Das Gas verlässt den Apparat als Abgas 11 oberhalb der Expansionszone 14 über das Abluftteil 19, in das optional ein Entstaubungssystem (z.B. Filterpatronen oder Textilfilterelemente) integriert werden kann.

Im Prozessraum 8 befindet sich eine Menge an Partikeln, die durch den Prozessgasstrahl nach oben hin mitgerissen werden. Im oberen Bereich des Prozessraumes 8 sowie in der darüber befindlichen Expansionszone 14 nimmt die Gasgeschwindigkeit ab, so dass die aufwärts strömenden Teilchen seitlich aus dem Gasstrahl 23 heraustreten und in den Prozessraum 8 zurückfallen. Der Prozessraum 8 wird im unteren Bereich von geneigten Seitenwänden 29 begrenzt. Bedingt durch diese Seitenneigung werden die Teilchen unter Wirkung der Schwerkraft über die Rücklaufzone 24 in Richtung des Gaseintrittsspaltes 1 befördert, wo sie anschließend wieder vom Prozessgas in den Prozessraum 8 mitgerissen werden.

Durch diesen Mechanismus bildet sich eine sehr gleichförmige Feststoffzirkulation 15, bestehend aus einer Aufwärtsströmung und einem Rücklauf in Richtung des Prozessgaseintrittes. Dadurch liegt auch bei sehr geringen Mengen an Teilchen im Prozessraum 8 in der Kernzone oberhalb des Umlenkteiles 3 eine hohe Partikeldichte vor. In diesem Bereich werden ein oder mehrere Sprühdüsen 7 angeordnet, die gleichgerichtet zum Prozessgasstrahl nach oben sprühen und zum Einbringen der flüssigen Formulierung dienen.

Durch die hohe Partikelbeladung in der Kernzone ergeben sich in der Bedüsungszone 22 sehr vorteilhafte Bedingungen für den Wärme- und Stoffübergang. Weiterhin wird erreicht, dass sich die Flüssigkeit weitestgehend an den Teilchen abscheidet und diese somit gleichmäßig an den Partikeloberflächen benetzt werden. Das gleichmäßige Benetzen bei gleichzeitiger hoher Feststoffzirkulation zwischen Bedüsungsbereich und Rücklaufzone 24 bewirkt, dass ein sehr gleichmäßiger Flüssigkeitsfilm gebildet wird. Durch den Trocknungsprozess verdampft die Flüssigkeit und verlässt mit dem Abgas 11 den Apparat. Der in der Formulierung enthaltene Feststoff verbleibt auf der Teilchenoberfläche. Dadurch wachsen die Granulate sehr gleichförmig und homogen, was auch ohne die Verwendung spezieller Klassiereinrichtungen (z.B. Zick-Zack-Sichter) zu einer sehr engen Korngrößenverteilung des Produktes führt.

Das Prozessgas kann einen Teil der Partikel sowie Feingut und Stäube als feststoffbeladene Abluft 20 aus dem Prozessraum 8 ausgetragen. Zur Abscheidung dieser Teilchen kann das im Abluftteil 19 optional integrierte Filtersystem oder dem Apparat nachgeschaltete Entstaubungsanlagen verwendet werden. Im Falle einer integrierten Entstaubungsanlage 25 können beispielsweise Druckluftimpulse 18 genutzt werden, um die zurückgehaltenen Partikel als abgetrennter Feststoff 21 in den Prozessraum 8 zurückzuführen.

Im Vergleich zu Wirbelschichtapparaten mit integrierten Filteranlagen wird die Staubrückführung dadurch erleichtert, dass die aufwärts gerichtete Prozessgasströmung im wesentlichen örtlich begrenzt ist und somit die zurückzuführenden Teilchen außerhalb des Gasstrahles sicher absinken können. Durch die Sogwirkung in der Nähe des Gaseintrittsspaltes 1 wird dieser Mechanismus zusätzlich gefördert. Alternativ können von der Abluft abgeschiedene Teilchen in den Prozessraum 8 zurückgeführt werden. Dazu können im unteren Bereich der geneigten Seitenwände 29 verschiedenartigste Zuführungen 26 angeordnet sein. Bedingt durch die hohe Geschwindigkeit des Prozessgasstrahls in der Nähe des Gaseintrittsspaltes 1 werden die feinen Partikel angesaugt und der Bedüsungszone 22 zugeführt, wo diese mit Flüssigkeit benetzt werden und am Wachstumsprozess teilnehmen.

Optional eingebaute Leitbleche 16 stützen den Gasstrahl, verstärken den Sogeffekt und verbessern die Zuführung der Feststoffe in der Bedüsungszone 22 hinein. Eventuell auftretende Agglomerationseffekte werden minimiert, da im Bedüsungsbereich sehr hohe Strömungsgeschwindigkeiten und somit höhere Trennkräfte als in Wirbelschichten auftreten. Dadurch werden Teilchen separiert und wachsen zu sehr kugeligen Granulaten.

Das Strömungsprofil des Prozessgases im Prozessraum 8 bewirkt weiterhin, dass von der optional integrierten Filteranlage in den Prozessraum zurückgeführte Feinpartikel nicht in die Bedüsungszone 22 zurückfallen. Dadurch wird das Verkleben von Feinpartikeln und daraus folgende Agglomeratbildungsprozesse unterbunden.

Zur kontinuierlichen Prozessführung kann der Apparat mit optional unterschiedlichen Eintragsystemen 13 für Feststoffe ausgerüstet werden. Dadurch können beispielsweise Partikel dem Prozess zugeführt werden, die durch Zerkleinerung von beispielsweise (zu großen) Granulaten gewonnen werden können oder/und aus zu kleinen Granulaten bestehen. Diese Teilchen dienen dann als Granulationskeime oder als Startfüllung zur Verkürzung der Inbetriebnahmezeit. Außerdem können hier Additive, Trägerstoffe oder andere Hilfsstoffe in fester Form in den Prozess eingeschleust werden, die in die Granulate eingebettet werden sollen.

Weiterhin kann der Apparat mit Austragsorganen 4 versehen werden, um Partikel aus dem Prozessraum 8 entnehmen zu können. Dies kann beispielsweise durch einen Überlauf oder durch ein volumetrisches Austragsorgan (z.B. eine Zellenradschleuse) oder auch durch einen Schwerkraftsicher (z.B. einen mit Sichtgas beaufschlagten Zick-Zack-Sichter oder einen Steigrohrsichter) erfolgen.

Optional können mechanische Aggregate 27 im Prozessraum 8, jedoch vorzugsweise im Bereich der Rücklaufzone 24 an den geneigten Wänden angebracht werden, um durch Zerkleinerung ausreichend Feinmaterial als Keime für den Granulatbildungsprozess zu erzeugen. Weiterhin kann die Rücklaufzone 24 optional zur Positionierung von Beheizungen oder anderen Wärmeübertragungseinrichtungen 28 genutzt werden. Beispielsweise kann die Apparatewand doppelwandig ausgeführt sein, um diese beispielsweise unter Nutzung von flüssigen oder gasförmigen Wärmeträgern zur Beheizung oder Kühlung zu verwenden. Alternativ könnten auch Mikrowellenheizer genutzt werden, um die Partikel in der Rücklaufzone 24 nachzutrocknen oder vorzuwärmen.

Im Prozessraum 8 oder in den darüber liegenden Apparateteilen, der Expansionszone 14 und dem Abluftteil 19, können optional Sprühdüsen 6 angeordnet werden, die vorzugsweise nach unten, aber auch teilweise nach oben sprühen. Hier kann ebenfalls die flüssige Formulierung eingedüst werden, um beispielsweise durch Sprühtrocknung im Apparat Granulationskeime zu erzeugen. Alternativ können über einige der Sprüheinrichtungen 6 und 7 Additive oder andere Komponenten in flüssiger Form eingesprüht und somit in die Granulatstruktur homogen eingebettet werden. Wenn die Sprühdüsen 7 die heißgasbeaufschlagte Zuluftkammer 17 passieren, können optional die flüssigkeitsführenden Teile mit Isolationen oder unterschiedlichen Kühlsystemen 12 versehen werden, um Schädigungen an der flüssigen Formulierung zu unterbinden.

Als weiterer Vorteil des erfindungsgemäßen Prozesses ist der sehr einfache Aufbau zu nennen, der eine hohe Betriebssicherheit und Störungsunempfindlichkeit mit sehr guter Reinigbarkeit verbindet. Somit werden verbesserte Produktionsbedingungen insbesondere hinsichtlich den Hygieneanforderungen bei Produktwechsel bei biologischen Stoffen geschaffen.

### Beispiele:

Die Erfindung wird anhand von Anwendungsbeispielen veranschaulicht, ohne dadurch in irgendeiner Weise eingeschränkt zu werden.

### Beispiel 1: Granulation von Malzextrakt aus Gerste

Es wurde eine flüssige Formulierung, die zu 100 % aus Gerste hergestellt wurde, verwendet.

Die Formulierung hatte einen Gesamt-Trockenstoffanteil von etwa 60 Massenprozent und wurde in einen Apparat eingesprüht, der durch den nachfolgend beschriebenen Aufbau gekennzeichnet ist. Der Prozessraum besteht aus einem rechteckigen Querschnitt und hat oberhalb der geneigten Seitenwände eine Querschnittsfläche von 0,2x1,0=0,2 m² und eine Höhe von etwa 1 m. Die Zufuhr des auf etwa 105 °C erwärmten Prozessluftstromes erfolgte über zwei längs durch den Apparat verlaufende Gaszuführungsspalte. Die flüssige Formulierung wurde über drei druckluftbeaufschlagte, vertikal nach oben sprühende Zweistoffdüsen in den Prozessluftstrahl mit einem Massenstrom von etwa 18 kg/h eingesprüht. Der Prozess wurde mit einer Startfüllung aus arteigenem Material gestartet. Alternativ kann jedoch diese Startfüllung zu Beginn des Prozesses durch Sprühtrocknung aufgebaut werden. Im Prozessraum befanden sich im stationären Zustand bei kontinuierlicher Produktion etwa 15 kg an Partikeln. Durch den Verdampfungsprozess kühlte sich die Prozessluft ab und verließ mit etwa 70 °C den Apparat. Die Entstaubung der Abluft erfolgte durch ein im oberen Teil des Apparates integriertes Filtersystem, und der abgeschiedene Feststoff wurde in den Prozessraum in Spaltnähe als Keimematerial zugeführt. Die Entnahme von Granulaten aus dem Prozessraum erfolgte stirnseitig über ein Wehr und eine nachgeschalteten Zellenradschleuse. Das entnommene Granulat hat eine unverfestigte Schüttdichte von 760 g/l und folgende Korngrößenverteilung (Siebanalyse):
- > 1000 µm:: 0,0 Mass.-%
- 630...1000 µm:: 55,6 Mass.-%
- 400...630 µm:: 37,7 Mass.-%
- 315...400 µm:: 3,2 Mass.-%
- 100...315 µm:: 1,5 Mass.-%
- 0...100 µm:: 0 Mass.-%

Die mittlere Materialverweilzeit im kontinuierlichen Betrieb der Anlage betrug in diesem Beispiel etwa 80 Minuten.

### Beispiel 2: Granulation von Malzextrakt aus Gerste und Mais

Es wurde eine flüssige Formulierung, die zu 70 % aus Gerste und zu 30 % aus Mais hergestellt wurde, verwendet.

Die Formulierung hatte einen Gesamt-Trockenstoffanteil von etwa 70 Massenprozent und wurde in einen Apparat eingesprüht, der durch den nachfolgend beschriebenen Aufbau gekennzeichnet ist. Der Prozessraum besteht aus einem rechteckigen Querschnitt und hat oberhalb der geneigten Seitenwände eine Querschnittsfläche von 0,2x1,0=0,2 m² und eine Höhe von etwa 1 m. Die Zufuhr des auf etwa 105 °C erwärmten Prozessluftstromes erfolgte über zwei längs durch den Apparat verlaufende Gaszuführungsspalte. Die flüssige Formulierung wurde über drei druckluftbeaufschlagte, vertikal nach oben sprühende Zweistoffdüsen in den Prozessluftstrahl mit einem Massenstrom von etwa 20 kg/h eingesprüht. Der Prozess wurde mit einer Startfüllung aus arteigenem Material gestartet. Alternativ kann jedoch diese Startfüllung zu Beginn des Prozesses durch Sprühtrocknung aufgebaut werden. Im Prozessraum befanden sich im stationären Zustand bei kontinuierlicher Produktion etwa 15 kg an Partikeln. Durch den Verdampfungsprozess kühlte sich die Prozessluft ab und verließ mit etwa 70 °C den Apparat. Die Entstaubung der Abluft erfolgte durch ein im oberen Teil des Apparates integriertes Filtersystem, und der abgeschiedene Feststoff wurde in den Prozessraum in Spaltnähe als Keimematerial zugeführt. Die Entnahme von Granulaten aus dem Prozessraum erfolgte stirnseitig über ein Wehr und einer nachgeschalteten Zellenradschleuse. Das entnommene Granulat hat eine unverfestigte Schüttdichte von 690 g/l und folgende Korngrößenverteilung (Siebanalyse):
- > 1000 µm:: 0,0 Mass.-%
- 630...1000 µm:: 4,8 Mass.-%
- 400...630 µm:: 35,5 Mass.-%
- 315...400 µm:: 24,1 Mass.-%
- 100...315 µm:: 35,6 Mass.-%
- 0...100 µm:: 0 Mass.-%

Die mittlere Materialverweilzeit im kontinuierlichen Betrieb der Anlage betrug in diesem Beispiel etwa 60 Minuten.

### Beispiel 3: Granulation von Stammwürze

Es wurde eine flüssige Formulierung, wie sie üblicher Weise für die Bierherstellung erzeugt wird, verwendet.

Die Formulierung hatte einen Gesamt-Trockenstoffanteil von etwa 35 Massenprozent und wurde in einen Apparat eingesprüht, der durch den nachfolgend beschriebenen Aufbau gekennzeichnet ist. Der Prozessraum besteht aus einem rechteckigen Querschnitt und hat oberhalb der geneigten Seitenwände eine Querschnittsfläche von 0,2x1,0=0,2 m² und eine Höhe von etwa 1 m. Die Zufuhr des auf etwa 120 °C erwärmten Prozessluftstromes erfolgte über zwei längs durch den Apparat verlaufende Gaszuführungsspalte. Die flüssige Formulierung wurde über drei druckluftbeaufschlagte, vertikal nach oben sprühende Zweistoffdüsen in den Prozessluftstrahl mit einem Massenstrom von etwa 12 kg/h eingesprüht. Der Prozess wurde mit einer Startfüllung aus arteigenem Material gestartet. Alternativ kann jedoch diese Startfüllung zu Beginn des Prozesses durch Sprühtrocknung aufgebaut werden. Im Prozessraum befanden sich im stationären Zustand bei kontinuierlicher Produktion etwa 15 kg an Partikeln. Durch den Verdampfungsprozess kühlte sich die Prozessluft ab und verließ mit etwa 70 °C den Apparat. Die Entstaubung der Abluft erfolgte durch ein im oberen Teil des Apparates integriertes Filtersystem, und der abgeschiedene Feststoff wurde in den Prozessraum in Spaltnähe als Keimematerial zugeführt. Die Entnahme von Granulaten aus dem Prozessraum erfolgte stirnseitig über ein Wehr und eine nachgeschalteten Zellenradschleuse. Das entnommene Granulat hat eine unverfestigte Schüttdichte von 810 g/l und folgende Korngrößenverteilung (Siebanalyse):
- > 1000 µm:: 0,3 Mass.-%
- 630...1000 µm:: 46,5 Mass.-%
- 400...630 µm:: 31,5 Mass.-%
- 315...400 µm:: 9,9 Mass.-%
- 100...315 µm:: 11,8 Mass.-%
- 0...100 µm:: 0 Mass.-%

Die mittlere Materialverweilzeit im kontinuierlichen Betrieb der Anlage betrug in diesem Beispiel etwa 3 Stunden.

Die Erfindung lässt sich also wie folgt zusammenfassen:

Die Erfindung betrifft ein Verfahren zur Herstellung von Granulaten aus Malzextrakt.

Aufgabe der Erfindung ist es, ein Verfahren zur Herstellung von Granulaten zu schaffen, bei dem die Granulate kontinuierlich oder chargenweise unter weitester Vermeidung von Temperaturungleichverteilungen im Herstellungsprozess hergestellt werden können. Gleichzeitig soll die Kontrollierbarkeit der Granulation bei der Herstellung verbessert werden.

Erfindungsgemäß erfolgt die Herstellung von Granulaten durch eine Verknüpfung zwischen den thermischen Bedingungen in der Sprühzone und den Temperaturbedingungen im übrigen Bereich des Apparates. Im erfindungsgemäßen Prozess wird dies dadurch erreicht, dass die Zuführung des erhitzten Prozessgases zur Trocknung ausschließlich im Bedüsungsbereich erfolgt. Die sichere Zuführung von Teilchen in den Bedüsungsbereich hinein erfolgt durch die spezielle geometrische Gestaltung des Apparates unter Nutzung der Schwerkraft.

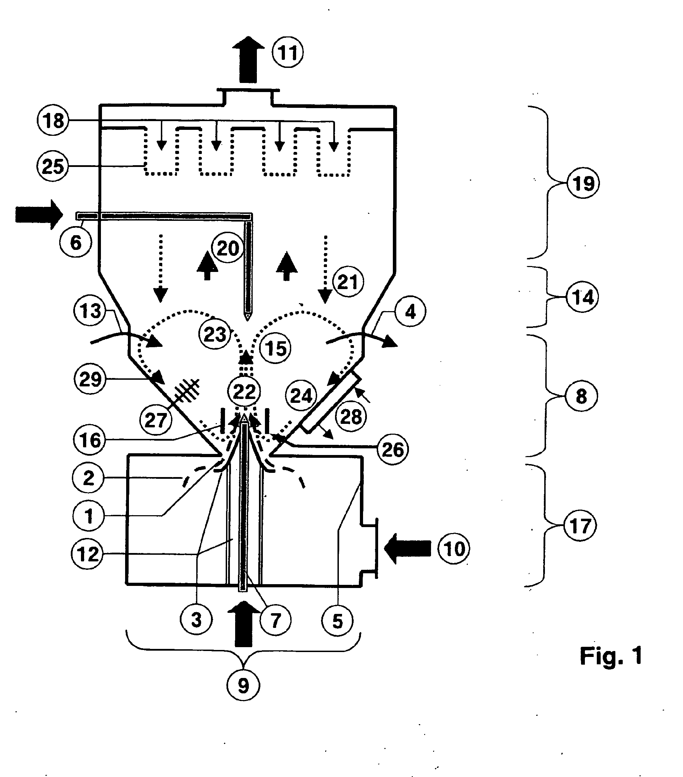

## Patentansprüche

1. Verfahren zur Herstellung von Granulaten aus Malzextrakt **dadurch gekennzeichnet, dass**
a. eine flüssige Formulierung eines Malzextraktes über Sprüheinrichtungen in einen feststoffbeladenen Gasstrahl eingedüst wird,
b. die flüssige Formulierung mindestens einen zu granulierenden Wertstoff enthält,
c. die mit Flüssigkeit benetzten Materialteilchen im erwärmten Gasstrahl einem Trocknungs- und Granulationsprozess unterzogen werden,
d. die Teilchen nach einer Verweilzeit vom Gasstrahl getrennt und in den Prozessraum zurückgeführt werden,
e. die Teilchen durch Schwerkraft über geneigte Flächen dem Gaseintrittsbereich zugeführt werden,
f. Feinpartikel, Stäube und vom Prozessgas mitgerissene Teilchen abgeschieden werden und dem Prozess als Keimematerial für den Granulatbildungsprozess wieder zugeführt werden,
g. durch Materialzuführung in den über die vorzugsweise rotationssymmetrische oder langgestreckte Spaltöffnungen zugeführten Gasstrahl(en) eine in axialer Richtung des Reaktionsraumes liegende kreisähnliche Feststoffströmung erzeugt wird,
h. der Granulationsprozess kontinuierlich oder chargenweise durchgeführt wird und dass
i. ein Granulat entsteht mit einer engen Korngrößenverteilung im Körnungsbereich 0,1-1,0 mm, mit einer runden Kornform, einer Schüttdichte < 850 g/l und einer guten Löslichkeit in Wasser.

2. Verfahren nach Anspruch 1, **dadurch gekennzeichnet, dass** die Granulate über unterschiedliche Sichtvorrichtungen aus dem Prozessraum entnommen werden.

3. Verfahren nach Anspruch 1, **dadurch gekennzeichnet, dass** die Granulate über unterschiedliche volumetrische Austragsorgane aus dem Prozessraum entnommen werden.

4. Verfahren nach einem oder mehren Ansprüchen, **dadurch gekennzeichnet, dass** zu große oder zu kleine aus dem Prozess entnommene Granulate vom Gutprodukt abgetrennt werden.

5. Verfahren nach einem oder mehren Ansprüchen, **dadurch gekennzeichnet, dass** zu kleine, aus dem Prozess entnommenen Granulate in den Prozessraum als Keimmaterial zurückgeführt werden.

6. Verfahren nach einem oder mehren Ansprüchen, **dadurch gekennzeichnet, dass** zu große aus dem Prozess entnommenen Granulate durch ein beliebiges Zerkleinerungsaggregat zerkleinert und in den Prozessraum als Keimmaterial zurückgeführt werden.

7. Verfahren nach einem oder mehren Ansprüchen, **dadurch gekennzeichnet, dass** die in den Prozessraum zurückgeführten Granulate thermisch nachbehandelt werden.

8. Verfahren nach Anspruch 7, **dadurch gekennzeichnet, dass** die in den Prozessraum zurückgeführten Granulate getrocknet oder vorgewärmt werden.

9. Verfahren nach einem oder mehren Ansprüchen, **dadurch gekennzeichnet, dass** die in den Prozessraum zurückgeführten Granulate zerkleinert werden.

10. Verfahren nach einem oder mehren Ansprüchen, **dadurch gekennzeichnet, dass** Granulate aus unterschiedlichen Zusätzen und mit unterschiedlichen Mischungsverhältnissen hergestellt werden.

11. Verfahren nach einem oder mehren Ansprüchen, **dadurch gekennzeichnet, dass** dem Prozess zusätzliche Hilfsstoffe in fester Form (Pulver, Kristalle, o.ä.) zugeführt werden.

12. Verfahren nach einem oder mehren Ansprüchen, **dadurch gekennzeichnet, dass** die erzeugten Granulate im gleichen Apparat oder anschließend gecoatet werden.

13. Verfahren nach einem oder mehren Ansprüchen, **dadurch gekennzeichnet, dass** die mittlere Verweilzeit der Granulate im Prozessraum einstellbar ist und im Minuten- und Stundenbereich liegen kann.

## Claims

1. Method of preparing granulates from malt extract, **characterised in that**
a. a liquid formulation of a malt extract is sprayed into a solids-charged jet of gas by means of spray device,
b. the liquid formulation contains at least one desirable material which is to be granulated,
c. the particles of material wetted with liquid are subjected to a drying and granulation process in the heated gas jet,
d. after a dwell time the particles are separated from the gas jet and recycled into the processing chamber,
e. the particles are gravity-fed over inclined surfaces into the gas inlet area,
f. fine particles, dust and particles picked up by the processing gas are separated off and fed back into the process as germ material for the granulation process,
g. a flow of solids resembling a circle and situated in the axial direction of the reaction chamber is produced by feeding material into the gas jet(s) passing through slit-like openings which are preferably rotationally symmetrical or elongate,
h. the granulation process is carried out continuously or batchwise, and
i. a granulate is formed having a narrow particle size distribution with particles ranging from 0.1 to 1.0 mm, which are round in shape, having a bulk density of < 850 g/l and good solubility in water.

2. Method according to claim 1, **characterised in that** the granules are removed from the processing chamber through various sifting devices.

3. Method according to claim 1, **characterised in that** the granules are removed from the processing chamber through various volumetric discharging means.

4. Method according to one or more claims, **characterised in that** oversized or undersized granulates removed from the process are separated from the satisfactory product.

5. Method according to one or more claims, **characterised in that** undersized granulates removed from the process are fed back into the processing chamber as germ material.

6. Method according to one or more claims, **characterised in that** oversized granulates removed from the process are comminuted using any desired comminution equipment and fed back into the processing chamber as germ material.

7. Method according to one or more claims, **characterised in that** the granulates fed back into the processing chamber are subjected to a thermal after-treatment.

8. Method according to claim 7, **characterised in that** the granulates fed back into the processing chamber are dried or preheated.

9. Method according to one or more claims, **characterised in that** the granulates fed back into the processing chamber are comminuted.

10. Method according to one or more claims, **characterised in that** granulates are prepared from different added batches and in different mixing ratios.

11. Method according to one or more claims, **characterised in that** additional adjuvants in solid form (powders, crystals, or the like) are fed into the process.

12. Method according to one or more claims, **characterised in that** the granulates produced are coated in the same apparatus or subsequently.

13. Method according to one or more claims, **characterised in that** the average dwell time of the granulates in the processing chamber is adjustable and may range from minutes to hours.

## Revendications

1. Procédé de fabrication de granulés d'un extrait de malt, **caractérisé en ce que**
a. une formulation liquide d'un extrait de malt est pulvérisée via des dispositifs de pulvérisation dans un jet gazeux chargé en matières solides,
b. la formulation liquide contient au moins une matière de valeur à granuler,
c. les particules de matériaux mouillées par le liquide sont soumises dans le jet gazeux chauffé à un processus de séchage et de granulation,
d. les particules sont séparées après un temps de séjour du jet gazeux et ramenées dans l'espace du processus,
e. les particules sont amenées à la zone d'entrée du gaz par la force de gravité via des surfaces inclinées,
f. des fines particules, des poussières et des particules entraînées par le gaz du processus sont séparées et sont de nouveau amenées vers le processus comme matériaux de germination pour le processus de formation des granulés,
g. grâce à l'introduction de matériaux dans le ou les jets gazeux amenés via les ouvertures à fentes longitudinales ou à rotation symétrique, un flux de matières solides sensiblement circulaire situé dans la direction axiale de l'espace de réaction est généré,
h. le processus de granulation est exécuté de façon continue ou par charges successives,
i. un granulé est formé avec une composition granulométrique étroite dans la plage de granulation de 0,1-1,0 mm, avec une forme de granulé ronde, une densité en vrac < 850g/l et une bonne solubilité dans l'eau.

2. Procédé selon la revendication 1, **caractérisé en ce que** les granulés sont retirés via différents dispositifs de classification de l'espace du processus.

3. Procédé selon la revendication 1, **caractérisé en ce que** les granulés sont retirés via différents organes d'extraction volumétriques de l'espace de processus.

4. Procédé selon l'une quelconque ou plusieurs des revendications, **caractérisé en ce que** les granulés trop gros ou trop petits retirés du processus sont séparés du produit de qualité.

5. Procédé selon l'une quelconque ou plusieurs des revendications, **caractérisé en ce que** les granulés trop petits retirés du processus sont ramenés dans l'espace de processus comme matériaux de germination.

6. Procédé selon l'une quelconque ou plusieurs des revendications, **caractérisé en ce que** les granulés trop gros retirés du processus sont broyés par un agrégat de broyage quelconque et sont ramenés dans l'espace de processus comme matériaux de germination.

7. Procédé selon l'une quelconque ou plusieurs des revendications, **caractérisé en ce que** les granulés ramenés dans l'espace de processus sont traités thermiquement ultérieurement.

8. Procédé selon la revendication 7, **caractérisé en ce que** les granulés ramenés dans l'espace de processus sont séchés ou préchauffés.

9. Procédé selon l'une quelconque ou plusieurs des revendications, **caractérisé en ce que** les granulés ramenés dans l'espace de processus sont broyés.

10. Procédé selon l'une quelconque ou plusieurs des revendications, **caractérisé en ce que** les granulés sont fabriqués à partir de différents additifs et avec différentes proportions de mélange.

11. Procédé selon l'une quelconque ou plusieurs des revendications, **caractérisé en ce que** des matières auxiliaires supplémentaires sont amenées au processus sous une forme solide (poudre, cristaux, etc.).

12. Procédé selon l'une quelconque ou plusieurs des revendications, **caractérisé en ce que** les granulés générés sont enduits dans le même appareil ou par la suite.

13. Procédé selon l'une quelconque ou plusieurs des revendications, **caractérisé en ce que** le temps de séjour moyen des granulés dans l'espace de processus est réglable et peut se situer dans une plage de minutes et d'heures.
